Europäisches Patentamt

European Patent Office

Office européen des brevets

(19)

(11) Numéro de publication : **0 159 245**
**B1**

(12) **FASCICULE DE BREVET EUROPÉEN**

(45) Date de publication du fascicule du brevet :
29.07.87

(51) Int. Cl.⁴ : **B 60 S   1/34**

(21) Numéro de dépôt : 85400571.7

(22) Date de dépôt : 25.03.85

(54) **Dispositif d'essuie-glace.**

(30) Priorité : 06.04.84 FR 8405500

(43) Date de publication de la demande :
23.10.85 Bulletin 85/43

(45) Mention de la délivrance du brevet :
29.07.87 Bulletin 87/31

(84) Etats contractants désignés :
DE IT

(56) Documents cités :
WO-A-83 /010 43
FR-A- 1 561 395
FR-A- 2 203 335

(73) Titulaire : **EQUIPEMENTS AUTOMOBILES MARCHAL**
**21-27 boulevard Gambetta**
**F-92130 Issy les Moulineaux (FR)**

(72) Inventeur : **Grare, Régis**
**1, Allée des Troènes**
**F-91190 Gif Sur Yvette (FR)**

(74) Mandataire : **Peuscet, Jacques**
**Cabinet Peuscet 68, rue d'Hauteville**
**F-75010 Paris (FR)**

## Description

L'invention est relative à un dispositif d'essuie-glace, notamment monobalai ou à double balai, du genre de ceux qui comprennent, pour au moins un des balais, d'une part, un bras principal articulé, à une extrémité, sur un axe porté par une tête d'entraînement qui est bloquée en rotation sur un arbre d'entraînement sensiblement orthogonal au plan moyen d'une surface à balayer, ce bras principal étant muni, à son autre extrémité, d'un culbuteur articulé sur le bras et portant un balai d'essuie-glace lui-même articulé sur le culbuteur, et, d'autre part, un bras auxiliaire articulé à une extrémité sur une partie du culbuteur et, à son autre extrémité, sur un axe sensiblement parallèle à l'axe d'articulation du bras principal, ledit axe d'articulation du bras auxiliaire étant porté par une chape qui peut tourner autour d'un axe géométrique sensiblement parallèle audit arbre d'entraînement mais décalé, par rapport à ce dernier, suivant une direction transversale à la direction longitudinale moyenne du bras principal, l'ensemble étant tel que lors de la rotation alternative du bras principal, un basculement du culbuteur est provoqué et engendre une trajectoire non circulaire du balai.

Un dispositif d'essuie-glace de ce genre est connu, par exemple, d'après la demande internationale publiée sous le n° WO-A-83/01043. Un tel dispositif permet, avec des moyens supplémentaires réduits, d'augmenter de manière non négligeable la surface balayée par le balai d'essuie-glace.

Toutefois, un problème se pose lorsqu'il s'agit de changer le balai d'essuie-glace, ou de nettoyer la surface à balayer.

On sait, en effet, que dans les dispositifs d'essuie-glace, en vue du changement du balai d'essuie-glace, ou du nettoyage de la surface à balayer, le bras porte-balai est relevé ou « débrayé », c'est-à-dire écarté de la surface à balayer, par rotation autour d'un axe. Cette position « débrayée » est une position stable dans laquelle le bras porte-balai est maintenu éloigné de la surface à balayer.

Dans le cas d'un dispositif d'essuie-glace du genre de celui de l'invention, la présence d'un bras auxiliaire monté sur une chape décalée par rapport à l'arbre d'entraînement du bras principal et articulé sur le culbuteur, lui-même relié au bras principal, crée des difficultés pour le relevage.

Dans les montages proposés jusqu'à ce jour pour de tels dispositifs d'essuie-glace comprenant un bras principal, un bras auxiliaire et un culbuteur, il n'est pas possible de réaliser un relevage ou un « débrayage » simultané, complet, du bras principal et du bras auxiliaire, pour éloigner le balai d'essuie-glace de la surface à essuyer, sans provoquer le blocage ou le coïncement, à partir d'un certain angle de relevage, ou sans avoir à effectuer des démontages préalables au niveau des articulations reliant les différents éléments. Le relevage complet du bras principal suivant un angle supérieur à 45° est exclu, dans le cas où un bras auxiliaire est présent, alors qu'un tel relevage est courant lorsque l'on souhaite changer un balai d'essuie-glace sur un dispositif d'essuie-glace comportant un seul bras, ou même simplement pour nettoyer le pare-brise.

Malgré tout, dans les dispositifs d'essuie-glace comportant un bras principal, un bras auxiliaire et un culbuteur, connus jusqu'à ce jour, il est généralement possible d'écarter simultanément le bras principal et le bras auxiliaire d'un angle suffisant, par rapport à la surface à essuyer, pour pouvoir retirer le balai d'essuie-glace, en vue de son changement. Cependant dans ce cas, la position prise est instable et il est nécessaire de maintenir manuellement l'ensemble pendant toute l'intervention. Cet angle de relevage, inférieur à 45°, ne doit pas être franchi sous peine de déformer et de fausser les pièces du dispositif, notamment le bras auxiliaire et le bras principal.

On a donc cherché à mettre en place des systèmes de butée empêchant l'utilisateur de relever le bras principal et le bras auxiliaire au-delà d'un angle déterminé. La mise en place de tels systèmes de butée est relativement délicate, et conduit à divers inconvénients, notamment une augmentation de la masse du dispositif d'essuie-glace, à un aspect esthétique discutable et à un sur-coût non négligeable.

En outre, l'efficacité d'un tel système de butée est douteuse. En effet, les utilisateurs sont habitués, avec les dispositifs d'essuie-glace comportant un seul bras, à relever ce bras à plus de 45°, par rapport à la surface à essuyer, lors d'un changement de balai d'essuie-glace. Il peut donc arriver qu'un utilisateur en tirant sur le bras principal d'un dispositif d'essuie-glace comportant un bras principal et un bras auxiliaire, poursuive son effort de traction même si le système de butée intervient, en raison des habitudes acquises. Si l'utilisateur exerce son effort à l'extrémité du bras principal munie du culbuteur, le bras de levier est important par rapport au système de butée, et le bras principal ainsi que le bras auxiliaire peuvent être déformés lors de ce mouvement.

L'invention a pour but, surtout, de fournir un dispositif d'essuie-glace comportant un bras principal, un bras auxiliaire, et un culbuteur, du genre défini précédemment, qui réponde mieux que jusqu'à présent aux diverses exigences de la pratique et qui, notamment, permette d'effectuer d'une manière simple et rapide un changement de balai d'essuie-glace, sans risque de déformation ou de détérioration du bras principal et/ou du bras auxiliaire et sans avoir à mettre en place un système de butée spécial.

Selon l'invention, un dispositif d'essuie-glace du genre défini précédemment, est caractérisé par le fait que l'axe d'articulation du bras auxiliaire est décalé, par rapport à l'axe géométrique de rotation de la chape, suivant la direction longitudinale moyenne du bras principal, d'une distance qui permette de relever, normalement, l'ensemble du bras principal et du bras auxiliaire en les écartant de la surface à essuyer, par rotation autour desdits axes d'articulation du bras principal et du bras auxiliaire.

Par l'expression « relever normalement », il faut comprendre que le relevage du bras principal et du bras auxiliaire a une amplitude comparable à celle du relevage du bras classique d'un dispositif d'essuie-glace, lors de l'opération de changement du balai d'essuie-glace ; cet angle de relevage est d'au moins 45°, par rapport à la position pour laquelle le balai est en appui contre la surface à essuyer, et de préférence est de l'ordre de 80° pour le bras principal.

Généralement, le bras auxiliaire, dans sa région située vers le basculeur, est situé au-dessous du bras principal, c'est-à-dire qu'il se trouve entre le bras principal et la surface à essuyer ; l'axe d'articulation du bras auxiliaire est alors décalé, par rapport à l'axe géométrique de rotation de la chape, de manière à se trouver du côté opposé au bras principal, par rapport audit axe de rotation de la chape.

L'axe géométrique de rotation de la chape du bras auxiliaire peut être situé dans un plan passant par l'axe de l'arbre d'entraînement et orthogonal à la direction longitudinale moyenne du bras principal, lorsque le balai est en appui sur la surface à essuyer ; la chape du bras auxiliaire comporte, avantageusement, une extension dirigée du côté où le décalage des axes d'articulation est souhaité, l'axe d'articulation du bras auxiliaire étant prévu vers l'extrémité de cette extension.

La chape du bras auxiliaire peut comporter un évidement, tel qu'une gorge ou une rainure, propre à recevoir et à guider la partie du bras auxiliaire située au niveau de cette chape, lorsque le bras auxiliaire se trouve au voisinage de la surface à essuyer, le balai d'essuie-glace étant en appui contre cette surface.

L'invention consiste, mises à part les dispositions exposées ci-dessus, en certaines autres dispositions dont il sera plus explicitement question ci-après, à propos d'un mode de réalisation particulier décrit avec référence aux dessins ci-annexés, mais qui n'est nullement limitatif.

La figure 1, de ces dessins, est une vue en élévation latérale d'un dispositif d'essuie-glace conforme à l'invention, partiellement représenté, le bras principal et le bras auxiliaire étant montrés en position basse, en position relevée, et dans une position intermédiaire.

La figure 2 est une vue en plan, par rapport à la figure 1, du bras principal et du bras auxiliaire dans leur position basse.

La figure 3 enfin, est un détail montrant en perspective, la chape du bras auxiliaire.

En se reportant aux dessins, on peut voir un dispositif d'essuie-glace comprenant un bras principal 1 articulé, à une extrémité, sur un axe 2 sensiblement parallèle au plan moyen P d'une surface S à balayer. La surface S est schématiquement représentée ; elle est généralement constituée par la surface d'un pare-brise. L'axe 2 est porté par une tête d'entraînement 3 qui est bloquée en rotation sur un arbre d'entraînement 4 sensiblement orthogonal au susdit plan moyen P. L'arbre d'entraînement 4 peut être mis en rotation alternative autour de son axe géométrique par des moyens « moteurs » non représentés. Le bras principal 1 est muni, à son autre extrémité, d'un culbuteur 5 qui est articulé, à une de ses extrémités, sur le bras 1. L'autre extrémité du culbuteur 5 porte, de manière articulée, un balai d'essuie-glace 6. Le culbuteur est généralement situé, dans sa totalité, entre la surface S et le bras 1.

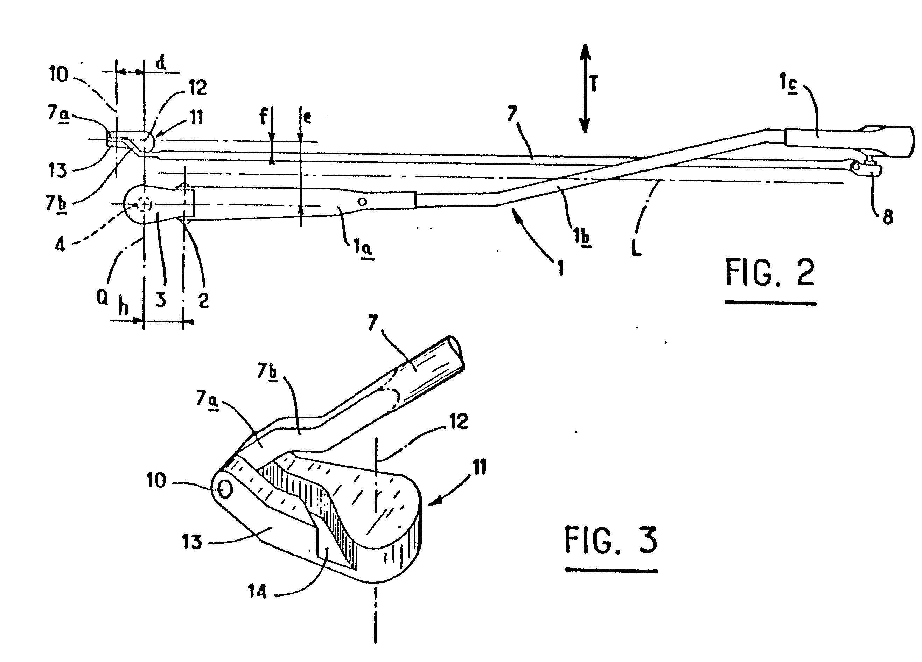

Le dispositif d'essuie-glace comporte, également, un bras auxiliaire 7 articulé, à une extrémité 8, notamment par l'intermédiaire d'une articulation à rotule ou analogue, sur une partie 9 du culbuteur. Selon la réalisation du dessin, cette partie 9 est une partie intermédiaire du culbuteur 5 située entre l'axe d'articulation du culbuteur sur le bras 1 et l'axe d'articulation du balai 6 sur le culbuteur 5. Le bras auxiliaire 7 est articulé, à son autre extrémité, sur un axe 10 sensiblement parallèle à l'axe d'articulation 2 du bras principal 1. L'axe d'articulation 10 du bras auxiliaire est porté sur une chape 11 qui peut tourner autour d'un axe géométrique 12 sensiblement parallèle à l'arbre d'entraînement 4. Comme visible sur la figure 2, l'axe 12 est décalé, par rapport à l'arbre 4, d'une distance e suivant une direction T, matérialisée par une double flèche, transversale à la direction longitudinale moyenne L du bras principal 1.

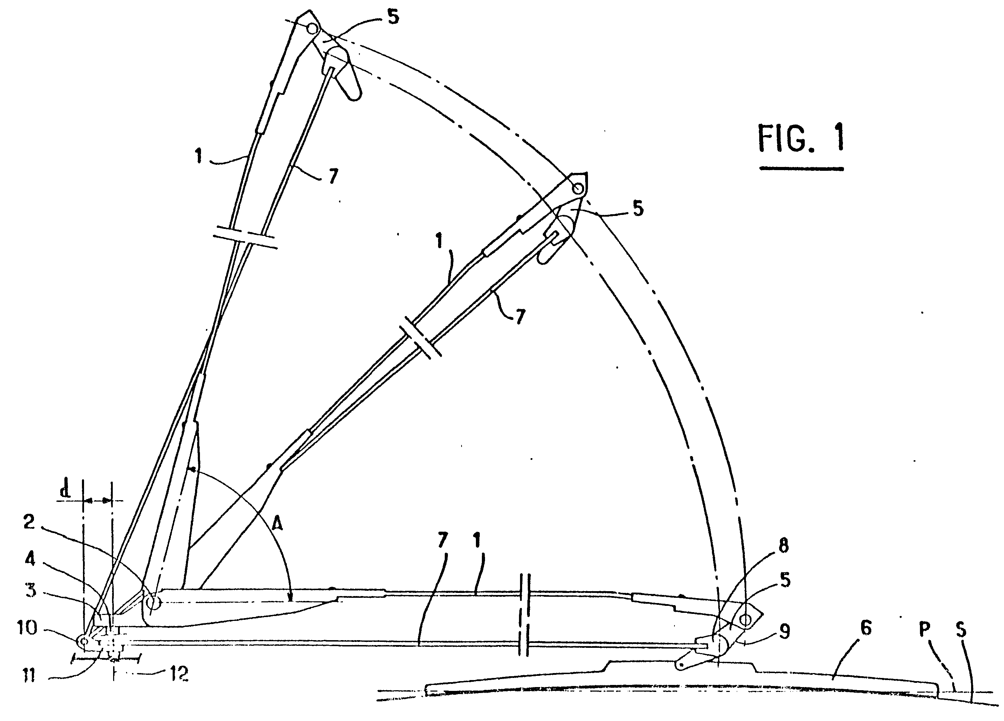

On sait, qu'avec un tel ensemble, lors de la rotation alternative du bras principal 1, et du bras auxiliaire 7 tournant autour de l'axe géométrique 12, pour un certain angle de rotation du bras principal 1, un basculement du culbuteur 5 est provoqué. Lors de ce basculement, la partie intermédiaire 9 du culbuteur, qui se trouve en quelque sorte en retrait par rapport à l'extrémité du bras 1 dans la position représentée sur la figure 1, passe au-delà de ladite extrémité du bras 1 et éloigne le balai 6 de l'arbre 4. Il en résulte une trajectoire non circulaire du balai 6 et une augmentation de la surface balayée.

Pour permettre de relever ou de « débrayer » simultanément le bras principal 1 et le bras auxiliaire 7 comme illustré sur la figure 1, notamment en vue d'un changement du balai d'essuie-glace 6, l'axe d'articulation 10 du bras auxiliaire est décalé, par rapport à l'axe géométrique de rotation 12 de la chape 11, suivant la direction longitudinale moyenne L du bras principal 1, dans un sens et d'une distance d (figure 2) tels que l'on puisse relever, normalement, l'ensemble du bras principal 1 et du bras auxiliaire en les écartant de la surface à essuyer S par rotation autour desdits axes d'articulation 2 et 10.

Par l'expression « relever normalement », il faut comprendre que le relevage du bras principal 1 a une amplitude A (figure 1) comparable à celle du relevage d'un bras unique classique d'un dispositif d'essuie-glace lors de l'opération de changement du balai d'essuie-glace. Cet angle A est d'au moins 45° par rapport à la position pour laquelle le balai 6 est en appui contre la surface S ; de préférence, l'angle A est de l'ordre de 80° pour le bras principal 1.

Comme visible sur la figure 2, le bras 1 a son extrémité 1c, éloignée de l'arbre 4, déportée par rapport à cet arbre. Le bras 1 présente une première partie 1a, s'entendant depuis l'axe 2 parallèlement à la direction L ; cette première partie 1a est suivie par une partie intermédiaire 1b inclinée par rapport à la direction L de manière à se diriger du côté de la partie 1a où est situé l'axe d'articulation 10 du bras auxiliaire 7. Cette partie intermédiaire passe au-dessus du bras auxiliaire 7, et est prolongée par la partie d'extrémité 1c, du bras 1, parallèle à la direction L. Le culbuteur 5 est articulé sur l'extrémité de cette partie 1c agencée sous forme d'une chape.

Le bras auxiliaire 7 est rectiligne sur sa majeure partie et est situé, dans sa région voisine du basculeur 5, au-dessous du bras 1. Comme il apparaît sur la vue en plan de la figure 2, les bras 1 et 7 se croisent, la partie 1a étant située d'un côté du bras 7 alors que l'autre partie 1c est située de l'autre côté du même bras 7.

L'axe d'articulation 10 est décaé, par rapport à l'axe 12, de manière à se trouver du côté opposé au bras principal 1 ; autrement dit, selon la représentation de la figure 2, l'axe 10 est décalé vers la gauche par rapport à l'axe 12 de rotation de la chape 11.

Cet axe géométrique de rotation 12 peut être situé dans un plan Q (figure 2) passant par l'axe géométrique de l'arbre 4 et orthogonal à la direction longitudinale moyenne L du bras 1 (lorsque le balai 6 est en appui sur la surface S). La chape 11 comporte une extension 13 dirigée du côté où le décalage d est souhaité ; dans l'exemple de réalisation du dessin, l'extension 13 est tournée du côté opposé au bras 1, de telle sorte que l'axe 10 soit reporté en arrière du plan Q, le bras 1 étant considéré comme situé en avant de ce plan. L'axe 2 d'articulation du bras 1 est situé à une distance h (figure 2) de l'axe 12 et du plan Q, du côté opposé à l'axe 10. La distance d peut être de l'ordre de grandeur de la distance h.

Comme visible sur les figures 2 et 3, l'extrémité 7a, du bras 7, articulée sur la chape 11, est décalée, transversalement, d'une distance f. Cette partie 7a, sensiblement parallèle à la majeure partie du bras 7, est reliée à cette majeure partie par une zone de transition 7b inclinée en sens contraire de la partie intermédiaire 1b du bras 1. La ligne moyenne de l'extrémité 7a est parallèle à la direction L et coupe l'axe 12 de rotation de la chape.

Comme bien visible sur la figure 3, la chape 11 peut comporter une gorge ou une rainure 14 propre à recevoir et à guider la partie 7a et une partie de la zone de transition 7b du bras auxiliaire 7, lorsque ce bras auxiliaire se trouve au voisinage de la surface S (position basse de la figure 1). Lorsque le bras est relevé, les parties 7a et 7b sortent de la gorge 14. La ligne moyenne de la rainure 14 est une ligne brisée formant un angle obtus.

Avec un tel dispositif d'essuie-glace, lorsque l'on veut procéder au remplacement d'un balai 6, on soulève le bras principal 1 de la surface S, de manière classique, comme représenté sur la figure 1. Le rejet de l'axe d'articulation 10 du bras auxiliaire 7, en arrière de la chape 11, permet au dispositif d'essuie-glace d'effectuer le mouvement de relevage complet représenté sur la figure 1. Au cours de ce mouvement, les positions relatives du bras principal 1 et du bras auxiliaire 7 se modifient, et le basculeur 5 change de position, mais sans introduire de blocage empêchant l'exécution complète du mouvement.

Le décalage d est adapté à la géométrie du système et peut notamment être supérieur à 1 cm.

Le dispositif de l'invention reste d'une construction simple, tout en permettant d'éviter une déformation ou une détérioration des bras lors d'un changement de balai.

On a décrit un exemple de réalisation dans lequel l'axe 2 d'articulation du bras principal est sensiblement parallèle au plan moyen P de la surface S à balayer. Toutefois cet axe 2 peut faire un angle, notament pouvant atteindre 30°, par rapport audit plan moyen Q, sans sortir de l'invention. Il suffit d'incliner l'axe d'articulation 10 du bras auxiliaire d'un angle équivalent, par rapport au plan moyen Q, pour obtenir un balayage satisfaisant.

## Revendications

1. Dispositif d'essuie-glace, notamment monobalai ou à double balai, comprenant, pour au moins un des balais, d'une part, un bras principal articulé (1), à une extrémité, sur un axe (2) porté par une tête d'entraînement (3) qui est bloquée en rotation sur un arbre d'entraînement (4) sensiblement orthogonal au plan moyen (P) d'une surface (S) à balayer ce bras principal étant muni, à son autre extrémité, d'un culbuteur (5) articulé sur le bras et comportant un balai d'essui-glace (6) lui-même articulé sur le culbuteur (5), et, d'autre part, un bras auxiliaire (7) articulé à une extrémité sur une partie du culbuteur (5), et, à son autre extrémité, sur un axe (10) sensiblement parallèle à l'axe (2) d'articulation du bras principal (1), ledit axe d'articulation (10) du bras auxiliaire étant porté par une chape (11) qui peut tourner autour d'un axe géométrique (12) sensiblement parallèle audit arbre (4) d'entraînement mais décalé, par rapport à ce dernier, suivant une direction transversale à la direction longitudinale moyenne du bras principal (1), l'ensemble étant tel que lors de la rotation alternative du bras principal (1), un basculement du culbuteur (5) est provoqué et engendre une trajectoire non circulaire du balai, caractérisé par le fait que l'axe d'articulation (10) du bras auxiliaire (7) est décalé, par rapport à l'axe géométrique de rotation (12) de la chape (11), suivant la direction longitudinale moyenne (L) de ce bras principal, d'une distance (d), ce qui

# 0 159 245

permet de relever, normalement, l'ensemble du bras principal (1) et du bras auxiliaire (7) en les écartant de la surface à essuyer, par rotation autour desdits axes d'articulation (2, 10) du bras principal (1) et du bras auxiliaire (7).

2. Dispositif selon la revendication 1, caractérisé par le fait que l'axe (2) d'articulation du bras principal (1) est sensiblement parallèle au plan moyen (P) de la surface (S) à balayer.

3. Dispositif selon la revendication 1, caractérisé par le fait que l'axe (2) d'articulation du bras principal fait un angle par rapport au plan moyen (P) de la surface (S) à balayer.

4. Dispositif selon l'une quelconque des revendication 1 à 3, caractérisé par le fait que l'angle de relevage (A) du bras principal (1) est d'au moins 45° et de préférence de l'ordre de 80°, par rapport à la position pour laquelle le balai (6) est en appui contre la surface (S) à essuyer.

5. Dispositif d'essuie-glace selon l'une quelconque des revendications 1 à 4, dans lequel le bras auxiliaire, dans sa région située vers le basculeur, est situé au-dessous du bras principal, caractérisé par le fait que l'axe d'articulation (10) du bras auxiliaire (7) est décalé, par rapport à l'axe géométrique (12) de la chape (11), de manière à se trouver du côté opposé au bras principal (1), par rapport audit axe de rotation (12) de la chape (11).

6. Dispositif d'essuie-glace selon l'une quelconque des revendications précédentes, dans lequel l'axe géométrique de rotation de la chape du bras auxiliaire est situé dans un plan passant par l'axe de l'arbre d'entraînement et orthogonal à la direction longitudinale moyenne du bras principal, lorsque le balai est en appui sur la surface à essuyer, caractérisé par le fait que la chape (11) du bras auxiliaire (7) comporte une extension (13) dirigée du côté où le décalage des axes d'articulation (10, 2) est souhaité, l'axe d'articulation (10) du bras auxiliaire (7) étant prévu vers l'extrémité de cette extension (13).

7. Dispositif selon la revendication 6, caractérisé par le fait que la chape (11) du bras auxiliaire comporte un évidement (14) tel qu'une gorge ou une rainure, propre à recevoir et à guider la partie (7a, 7b) du bras auxiliaire (7) située au niveau de cette chape, lorsque le bras auxiliaire (7) se trouve au voisinage de la surface (S) à essuyer, le balai d'essuie-glace (6) étant en appui contre cette surface.

8. Dispositif selon l'une quelconque des revendications précédentes caractérisé par le fait que l'extrémité (7a) du bras auxiliaire (7), articulée sur la chape (11) est décalée transversalement d'une distance (f).

9. Dispositif selon la revendication 8, caractérisé par le fait que la ligne moyenne de l'extrémité (7a) du bras auxiliaire (7) articulée sur la chape (11) est parallèle à la direction longitudinale moyenne (L) du bras principal (1) et coupe l'axe (12) de rotation de la chape (11).

10. Dispositif selon l'ensemble des revendications 7 et 8, ou 7 et 9, caractérisé par le fait que la ligne moyenne de la rainure (14) est une ligne brisée formant un angle obtus.

## Claims

1. Windscreen wiper device, especially single-blade or double-blade, comprising, for at least one of the blades, on the one hand a main arm (1) articulated at one end on an axle (2) carried by a drive head (3) blocked in terms of rotation on a drive shaft (4) substantially at right angles to the mid-plane (P) of a surface (S) to be wiped, this main arm being equipped at its other end with a rocker (5) articulated on the arm and having a windscreen-wiper blade (6) itself articulated on the rocker (5), and on the other hand an auxiliary arm (7) articulated at one end on part of the rocker (5) and at its other end on an axle (10) substantially parallel to the pivot axle (2) of the main arm (1), the said pivot axle (10) of the auxiliary arm being carried by a fork (11) which can rotate about a geometrical axis (12) substantially parallel to the said drive shaft (4), but offset relative to the latter, in a direction transverse to the mean longitudinal direction of the main arm (1), the assembly being such that, during the alternating rotation of the main arm (1), a tilting of the rocker (5) is produced and generates a non-circular path of the blade, characterized in that the pivot axle (10) of the auxiliary arm (7) is offset a distance (d) relative to the geometrical axis of rotation (12) of the fork (11) in the mean longitudinal direction (L) of this main arm, thus making it possible, under normal conditions, to raise the assembly consisting of the main arm (1) and of the auxiliary arm (7), at the same time moving them away from the surface to be wiped, as a result of the rotation of the main arm (1) and auxiliary arm (7) about the said pivot axles (2, 10).

2. Device according to Claim 1, characterized in that the pivot axle (2) of the main arm (1) is substantially parallel to the mid-plane (P) of the surface (S) to be wiped.

3. Device according to Claim 1, characterized in that the pivot axle (2) of the main arm forms an angle relative to the mid-plane (P) of the surface (S) to be wiped.

4. Device according to any one of Claims 1 to 3, characterized in that the raising angle (A) of the main arm (1) is as least 45° and preferably of the order of 80° relative to the position in which the blade (6) is up against the surface (S) to be wiped.

5. Windscreen wiper device according to any one of Claims 1 to 4, in which the auxiliary arm, in its region located towards the rocker, is arranged underneath the main arm, characterized in that the pivot axle (10) of the auxiliary arm (7) is offset relative to the geometrical axis (12) of the fork (11), so as to be located on the side opposite the main arm (1) in relation to the said axis of rotation (12) of the fork (11).

6. Windscreen wiper device according to any one of the preceding claims, in which the geometrical axis of rotation of the fork of the auxiliary arm is located in a plane passing through the axis of the drive shaft and at right angles to the mean longitudinal direction of the main arm when the blade is up against the surface to be wiped, characterized in that the fork (11) of the auxiliary arm (7) has an extension (13) pointed in the direction in which the offset of the pivot axles (10, 2) is desired, the pivot axle (10) of the auxiliary arm (7) being arranged towards the end of this extension (13).

7. Device according to Claim 6, characterized in that the fork (11) of the auxiliary arm has a recess (14), such as a slot or groove, designed to receive and guide the part (7a, 7b) of the auxiliary arm (7) located in the region of this fork when the auxiliary arm (7) is near the surface (S) to be wiped, the windscreen wiper blade (6) being up against this surface.

8. Device according to any one of the preceding claims, characterized in that that end (7a) of the auxiliary arm (7) which is articulated on the fork (11) is offset transversely a distance (f).

9. Device according to Claim 8, characterized in that the mean line of that end (7a) of the auxiliary arm (7) which is articulated on the fork (11) is parallel to the mean longitudinal direction (L) of the main arm (1) and intersects the axis of rotation (12) of the fork (11).

10. Device according to Claims 7 and 8 or 7 and 9 as a whole, characterized in that the mean line of the groove (14) is a broken line forming an obtuse angle.

**Patentansprüche**

1. Scheibenwischeranordnung, insbesondere als Einfach- oder Doppelwischanordnung, bei der wenigstens einer der Wischer einerseits einen Hauptwischerarm (1) aufweist, der an einem Ende über eine Achse (2) angelenkt ist, welche von einem Antriebskopf (3) gehalten ist, der in Rotation versetzt wird durch eine Antriebswelle (4), welche im wesentlichen senkrecht zur mittleren Ebene (P) einer zu reinigenden Fläche (S) angeordnet ist, wobei der Hauptwischerarm an seinem anderen Ende einen Schwinghebel (5) besitzt, der an dem Arm angelenkt ist und ein Wischblatt (6) hält, das seinerseits an dem Schwinghebel (5) angelenkt ist, und bei der andererseits ein Hilfsarm (7) mit einem Ende an einem Teil dem Schwinghebels (5) und mit seinem anderen Ende an einer zur Schwenkachse (2) des Hauptarms (1) im wesentlichen parallelen Achse (10) angelenkt ist, wobei die schwenkachse (10) des Hilfsarms gehalten wird von einem Anschlußstück (11), welches um eine geometrische Achse (12) drehbar ist, die im wesentlichen parallel zu der Antriebvswelle (4) ist, jedoch zu dieser quer zur mittleren Längsrichtung des Hauptarms (1) versetzt ist, derart, daß bei der hin- und hergehenden Drehbewegung des Hauptarms (1) eine Schwingbewegung des Schwinghebels (5) erfolgt und der Wischer eine von der Kreisform abweichende Bahn beschreibt, dadurch gekennzeichnet, daß die Schwenkachse (10) des Hilfsarms (7) genenüber der geometrischen Drehachse (12) des Anschlußstücks (11) in der mittleren Längsrichtung (L) des Hauptarms um eine Strecke (d) versetzt ist, so daß im Normalzustand der Hauptarm (1) zusammen mit dem Hilfsarm (7) von der zu reinigenden Fläche durch Drehung um die Schwenkachsen (2, 10) des Hauptarms (1) beziehungsweise des Hilfsarms (7) abgehoben werden kann.

2. Scheibenwischeranordnung nach Anspruch 1, dadurch gekennzeichnet, daß die schwenkachse (2) des Hauptarms (1) im wesentlichen parallel zu der mittleren Ebene (P) der zu reinigenden Fläche (S) ist.

3. Scheibenwischeranordnung nach Anspruch 1, dadurch gekennzeichnet, daß die Schwenkachse (2) des hauptarms (1) mit der mittleren Ebene (P) der zu reinigenden Fläche (S) einen Winkel einschließt.

4. Scheibenwischeranordnung nach einem der ansprüche 1 bis 3, dadurch gekennzeichnet, daß der Abhebewinkel (A) des Hauptarms (1) wenigstens 45°, vorzugsweise etwa 80°, gegenüber derjenigen Stellung beträgt, in der das Wischblatt (6) auf der zu reinigenden Fläche (S) aufliegt.

5. Scheibenwischeranordnung nach einem der Ansprüche 1 bis 4, bei der der Hilfsarm sich mit seinem zum Wipphebel hin gelegenen Teil unterhalb des Hauptarms befindet, dadurch gekennzeichnet, daß die Schwenkachse (10) des Hilfsarms (7) gegenüber der geometrischen Achse (12) des Anschlußstücks (11) derart vesetzt ist, daß sie sich relativ zu der Drehachse (12) des Anschlußstücks (11) auf der dem Hauptarm (1) gegenüberliegenden Seite befindet.

6. Scheibenwischeranordnung nach einem der vorstehenden Ansprüche, bei der die geometrische Drehachse des Anschlußstücks des Hilfsarms in einer Ebene mit der Achse der Antriebswelle liegt und senkrecht ist zu der mittleren Längsrichtung des Hauptarms, wenn das Wischblatt auf der zu reinigenden Fläche aufliegt, dadurch gekennzeichnet, daß das Anschlußstück (11) des Hilfsarms (7) einen Ansatz (13) besitzt, der nach derjenigen Seite gerichtet ist, auf der sich die Versetzung der Schwenkachsen (10, 2) befinden soll, wobei die Schwenkachse (10) des Hilfsarms (7) sich am Ende des Ansatzses (13) befindet.

7. Scheibenwischeranordnung nach Anspruch 6, dadurch gekennzeichnet, daß das Anschlußstück (11) des Hilfsarms eine Aussparung (14) aufweist, die die Form einer Nut oder Rinne haben kann und denjenigen Teil (7a, 7b) des Hilfsarms (7) aufnimmt und führt, der sich im Bereich des Anschlußstücks befindet, wenn der Hilfsarm (7) sich nahe der zu reinigenden Fläche (S) befindet und das Wischblatt (6) auf dieser Fläche aufliegt.

8. Scheibenwischeranordnung nach einem der vorstehenden Ansprüche, dadurch gekennzeichnet, daß das Ende (7a) des Hilfsarms (7), das an dem Anschlußstück (11) angelenkt ist, um eine Strecke (f) in Querrichtung versetzt ist.

9. Scheibenwischeranordnung nach Anspruch 8, dadurch gekennzeichnet, daß die Mittellinie des Endes (7a) des an dem Anschlußstück (11) angelenkten Hilfsarms (7) parallel ist zur Mittellängsrichtung (L) des Hauptarms (1) und die Drehachse (12) des Anschlußstücks (11) schneidet.

10. Scheibenwischeranordnung nach den Ansprüchen 7 und 8 oder 7 und 9, dadurch gekennzeichnet, daß die Mittellinie der Rinne (14) eine stumpfwinklig geknickte Linie ist.

FIG. 1

0 159 245

FIG. 2

FIG. 3

0 159 245